(19) Europäisches Patentamt
European Patent Office
Office européen des brevets

(11) Veröffentlichungsnummer: **0 009 698**
**B1**

(12) # EUROPÄISCHE PATENTSCHRIFT

(45) Veröffentlichungstag der Patentschrift: **15.12.82**

(21) Anmeldenummer: **79103466.3**

(22) Anmeldetag: **17.09.79**

(51) Int. Cl.³: **C 08 G 18/12, C 09 D 3/72, D 06 M 15/52**

(54) **Polyurethan-Reaktivbeschichtungsmassen.**

(30) Priorität: 30.09.78 DE 2842805

(43) Veröffentlichungstag der Anmeldung:
**16.04.80 Patentblatt 80/8**

(45) Bekanntmachung des Hinweises auf die Patenterteilung:
**15.12.82 Patentblatt 82/50**

(84) Benannte Vertragsstaaten:
**AT BE CH DE FR GB IT NL SE**

(56) Entgegenhaltungen:
**FR - A - 1 321 178**
**FR - A - 2 163 518**

(73) Patentinhaber: **BAYER AG**
**Zentralbereich Patente, Marken und Lizenzen**
**D-5090 Leverkusen 1, Bayerwerk (DE)**

(72) Erfinder: **Recker, Klaus, Dr.**
**Wolfskaul 6**
**D-5000 Köln 80 (DE)**
Erfinder: **Reinecke, Gerd**
**Eschenweg 5**
**D-5060 Bergisch-Gladbach (DE)**

**EP 0 009 698 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Polyurethan-Reaktivbeschichtungsmassen

Die Erfindung betrifft verbesserte, lösungsmittelfreie rakelfähige Polyurethan-Reaktivsysteme mit langer Topfzeit für die Beschichtung von Geweben oder anderen Substraten.

Aus der DE—AS 15 04 690 ist ein Verfahren zur Beschichtung von Gewebeschläuchen bekannt geworden, bei welchem auf das Gewebe zunächst Kunststofflösungen in dünner Schicht aufgerakelt und anschließend die Beschichtungen durch Erwärmen des Schlauchs getrocknet werden. Dieses Verfahren hat jedoch zwei entscheidende Nachteile: Zur Erzielung einer blasenfreien Oberfläche der Gewebebeschichtung muß der Schlauch von innen her erwärmt werden, was einen zusätzlichen apparativen Aufwand bedeutet. Überdies erschwert die Anwesenheit von Lösungsmitteln die Verarbeitung, da umfangreiche Maßnahmen zur Absaugung der Lösungsmitteldämpfe getroffen werden müssen und explosionsgeschützte Verarbeitungsanlagen erforderlich sind.

In der FR—PS 2 163 518 stellt man zunächst in erster Stufe ein hochmolekulares, gehärtetes Polyurethan her, das als solches nicht rakelfähig ist, sondern ein hochschmelzendes, festes Elastomeres darstellt, das entweder thermoplastisch verarbeitet oder in organischen Lösungsmitteln gelöst verden muß, um es auf das Substrat zu bringen. Dieses Polyurethan stellt bereits ein hochmolekulares Polyurethanelastomeres dar, das für sich alleine als Überzug, Film oder Elastomeres verwendbar ist. Es kann zusätzlich einer Nachvernetzung mit Diisocyanat unterworfen werden, wodurch sich manche der Elastomereigenschaften noch verbessern lassen (in Stufe 2).

Zur Herstellung des Polyurethans der Stufe 1 wird ein Diisocyanat mit einer Mischung von 0,3—4 Mol eines niedermolekularen Diols, einem Hydroxyamin mit primären oder sekundären Aminogruppen und einem höhermolekularem Polyol mit Molekulargewichten zwischen 500 und 2500 umgesetzt, wobei das Molverhältnis des Hydroxyamins zum niedermolekularen Diol zwischen 0,02 und 1 beträgt. Durch Mitverwendung der Hydroxyamine sollen sich Polyurethane mit geringeren Viskositäten in Lösungsmitteln ergeben. Es handelt sich jedoch um Elastomerfeststoffe mit Shore-Härten zwischen 65 und 95 und typischen Festigkeiten und Dehnungen und nicht um rakelfähige Polyurethan-Reaktivsysteme mit langer Topfzeit.

Ein Verfahren zur Beschichtung von Gewebeschläuchen mit lösungsmittelfreien Systemen (Aufbringen einer Kunststoffschmelze) wird in der DE—PS 17 78 877 beschrieben. Nachteilig bei diesem Verfahren sind die für die Verarbeitung von Thermoplasten notwendigen hohen Temperaturen von ca. 200°C. Schmelzbad, Zuleitungen und Abstreifvorrichtung müssen auf diesem hohen Temperaturniveau gehalten werden. Außerdem bewirkt das verfahrensbedingt tiefe Eindringen der Kunststoffbeschichtung in das Gewebe eine starke Versteifung des Materials, so daß die Handhabung des fertigen Schlauchs erschwert wird.

In der DE—OS 15 70 548 werden lagerbeständige, lösungsmittelfreie, reaktive Polyurethanmassen für die Beschichtung von Geweben beschrieben, welche aus Polyhydroxylverbindungen, über 100°C schmelzenden Uretdiondiisocyanaten und über 80°C schmelzenden Kettenverlängerungsmitteln bestehen. Beschichtungspasten dieser Art sind zwar über längere Zeiträume hinweg lagerstabil, benötigen aber zur vollständigen Aushärtung unwirtschaftlich lange Reaktionszeiten (z.B. 90 Minuten bei 110°C).

Der Erfindung liegt somit die Aufgabe zugrunde, die oben beschriebenen Nachteile der bakannten Verfahren zur Beschichtung von Geweben — Anwesenheit von Lösungsmittel; zu kurze Topfzeit; hohe Verarbeitungstemperaturen; lange Aushärtungszeiten — zu vermeiden und gleichzeitig eine einfache und problemlose Handhabung der Beschichtungsmassen zu ermöglichen.

Diese Aufgabe wird mit den erfindungsgemäß zur Verfügung gestellten Polyurethansystemen gelöst.

Gegenstand der Erfindung sind lösungsmittelfreie, rakelfähige, pastenförmige, bei Raumtemperatur lagerstabile Polyurethan-Reaktivbeschichtungsmassen mit kurzer Aushärtungszeit beim Erhitzen, bestehend aus

A) 5 bis 30 Gew.-% bevorzugt 10 bis 20 Gew.%, eines Polyisocyanates mit einem Schmelzpunkt über 100°C, bevorzugt oberhalb von 125°C, und

B) 95 bis 70 Gew.%, bevorzugt 90 bis 80 Gew.%, einer Polyhydroxylverbindung, wobei die Komponente B) oder die Mischung von A) und B)
1 bis 4 Gew.% eines Molekularsiebes vom Natriumaluminiumsilikat-Typ,
0.1 bis 5 Gew.% eines Aktivators und ggf. weitere Zusatzstoffe enthält,

dadurch gekennzeichnet, daß Komponente B) ein Hydroxylgruppen aufweisendes Prepolymeres aus

a) einem Polyisocyanat,

b) 65 bis 80 Gew.%, bezogen auf die Summe der Komponenten b) bis e), eines teilweise verzweigten Polyätherpolyols, bevorzugt mit einer mittleren OH-Funktionalität von 2,5 bis 3, welches mehr als 90 Gew.%, bezogen auf die vorhandenen OH-Gruppen im Polyäther, sekundäre OH-Gruppen und ein Molekulargewicht von 1000 bis 4500, bevorzugt 2000 bis 4000, aufweist,

c) 0 bis 10 Gew.% bevorzugt 1 bis 5 Gew.% eines Polyesterpolyols mit einem Molekulargewicht von 500 bis 2000, bevorzugt eines Adipinsäurepolyesters mit einem

Molekulargewicht von 700 bis 1200,

d) 10 bis 30 Gew.%, bevorzugt 15 bis 25 Gew.% eines Glykols mit einem Molekulargewicht von 62 bis 250, bevorzugt 76 bis 150, und

e) 0,5 bis 5 Gew.% bevorzugt 1 bis 2 Gew.% eines hydroxylgruppenfreien Polyamins, Hydrazins oder Hydrazids darstellt, vorzugsweise eines aromatischen, hydroxylgruppenfreien Diamins mit einem Molekulargewicht unter 200, wobei

das Äquivalentverhältnis von Komponente a) zu den Komponenten b) bis e) zwischen 0,25 und 0,65 bevorzugt zwischen 0.35 und 0,6, liegt und wobei ggf. die Komponente c) anstatt in B) engebaut, dem Gemisch aus A) und B) zugestezt ist.

Vorzugsweise werden die Komponenten A) und B) in einem solchen Mengenverhältnis eingesetzt, daß das NCO/OH-Äquivalentverhältnis (inklusive der in Komponente A) eventuell enthaltenen verkappten NCO-Gruppen) zwischen 0,9:1 und 1,5:1, besonders bevorzugt zwischen 1,0:1 und 1,1:1, liegt.

Die erfindungsgemäßen Beschichtungssysteme weisen sehr lange Topfzeit bei vergleichsweise kurzer Aushärtungszeit auf.

Für den angestrebten Verwendungszweck der erfindungsgemäßen Reaktivsysteme ist es erforderlich, daß die oben angegebenen Kriterien hinsichtlich der Zusammensetzung von Komponente B) eingehalten werden.

Setzt man anstelle der teilweise verzweigten Polyäther b) solche mit linearem Aufbau ein, so werden unwirtschaftlich lange Aushärtungszeiten erhalten (Beispiel 3). Bevorzugt sind Polyäther mit überwiegend sekundären Hydroxylgruppen am Kettenende, da primäre Polyätherpolyole zu einer starken Verkürzung der Topfzeit führen (Beispiel 4).

Der Zusatz des Polyesterpolyols c) ist erfindungsgemäß bevorzugt, da sonst die Viskosität der Paste nach Einrühren des festen Diisocyanats A) bereits nach 24 Stunden so stark ansteigt, daß die Verarbeitung außerordentlich erschwert oder unmöglich gemacht wird (Beispiel 6).

Das Polyesterpolyol c) braucht aber nicht in das OH-Präpolymere B) chemisch eingebaut zu werden; es kann auch dem Gemisch von A) und B) als dritte Komponente zugesetzt werden.

Aus dem kurzkettigen Glykol d) und dem Polyisocyanat a) bildet sich im (überschüssigen) Polyätherpolyol b) ein darin zum Teil unlösliches OH-Präpolymer-Unsetzungsprodukt. Wird das OH-Präpolymere ohne Zusatz von Diamin e) hergestellt, so werden grobkörnige, sedimentierende Suspensionen des Umsetzungsproduktes aus a) und d) erhalten, die in nicht definierter Weise reagieren und zu einer Verschlechterung der mechanischen Werte führen (siehe Beispiel 5). Der Einbau einer geringen Menge einer aminofunktionellen Verbindung e) ist erforderlich, um eine feindisperse Verteilung des Hartsegment-Umsetzungsproduktes aus a) und d) im OH-Präpolymeren zu ermöglichen. Überraschenderweise bewirkt der Einbau der kleinen Menge von e) diese feindisperse Verteilung.

Der Zusatz von Molekularsieben f) ist erforderlich, um blasenfreie Beschichtungen zu erhalten. Darüber hinaus wird die Lagerstabilität der fertigen Beschichtungspaste deutlich verbessert. Ohne Zusatz von Molekularsieb f) hergestellt Beschichtungspasten zeigen eine geringere Lagerstabilität bei erhöhten Temperaturen. Beispiel 7 erläutert diesen Sachverhalt.

Wird auf die Vorverlängerung mit dem Polyisocyanat a) verzichtet, so werden zwar akzeptable Verarbeitungszeiten erhalten, die Beschichtung fällt jedoch sehr weich und klebrig aus und ist für die Praxis ungeeignet (Beispiel 8).

Als Komponente A) der erfindungsgemäßen Beschichtungsmassen kommen alle an sich bekannten Polyisocyanate (vorzugsweise Diisocyanate) mit einem Schmelzpunkt oberhalb von 100°C, vorzugsweise zwischen 125 und 200°C, in Frage. Beispiele hierfür sind u.a. 1,4-Dichlor - 2,5 - diisocyanatobenzol, 1 - Chlor - 4-methoxy - 2,5 - diisocyanatobenzol, 1,3 - Dimethoxy - 4,6 - diisocyanatobenzol, 3,3' - Dimethoxy - 4,4' - diisocyanatobiphenyl, 2,5,2',5'-Tetramethyl - 4,4' - diisocyanatodiphenylmethan, Diphenylsulfon-4,4'-diisocyanat, Naphthylen-1,5-diisocyanat sowie das Harnstoffdiisocyanat aus 1 Mol Wasser und 2 Mol 2,4-Tolylendiisocyanat, wobei die drei letztgenannten Diisocyanate bevorzugt sind.

Bevorzugt sind erfindungsgemäß als feste, hochschmelzende Polyisocyanate auch eine Üretdiongruppe aufweisende Diisocyanate, wie sie durch an sich bekannte Dimerisierung der in der Polyurethanchemie bekannten Polyisocyanate entstehen. Besonders bevorzugt ist das dimere 2,4-Toluylendiisocyanat.

Bei der Herstellung des OH-Präpolymeren (Komponente B) der erfindungsgemäßen Reaktivsysteme) kommen als Isocyanatkomponente a) im Prinzip alle an sich bekannten Polyisocyanate in Frage. Es sind dies aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q\ (NCO)_n$$

in der

n=2—4, vorzugsweise 2, und

Q einen aliphatischen Kohlenwasserstoffrest mit 2—18, vorzugsweise 6—10 C-Atomen,

einen cycloaliphatischen Kohlenwasserstoffrest mit 4—15, vorzugsweise 5—10 C-Atomen,

einen aromatischen Kohlenwasserstoffrest mit 6—15, vorzugsweise 6—13 C-Atomen, oder

einen araliphatischen Kohlenwasserstoffrest

mit 8—15, vorzugsweise 8—13 C-Atomen, bedeuten, z.B. Äthylen - diisocyanat, 1,4 - Tetramethylendiisocyanat, 1,6 - Hexamethylendiisocyanat, 1,12 - Dodecandiisocyanat, Cyclobutan-1,3-diisocyanat, Cyclohexan-1,3- und -1,4-diisocyanat sowie beliebige Gemische dieser Isomeren, 1 - Isocyanato - 3,3,5 - trimethyl - 5 - isocyanatomethyl - cyclohexan (DE-Auslegeschritt 1 202 785, US-Patentschritt 3 401 190), 2,4- und 2,6 - Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethyan-diisocyanat, 1,3- und 1,4-Phenylendiisocyanat, 2,4- und 2,6-Toluylendiisocyanat sowie beliebige Gemische dieser Isomeren Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten und z.B. in den GB-Patentschriften 874 430 und 848 671 beschrieben werden, m- und p-Isocyanatophenylsulfonylisocyanate gemäß der US-Patentschrift 3 454 606, perchlorierte Arylpolyisocyanate, wie sie z.B. In der DE - Auslegeschrift 1 157 601 (US-Patenschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsshriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsshriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließend Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4-Diphenylmethandiisocyanat ablieten.

Besonders bevorzugt sind die isomeren Toluylendiisocyanate.

Als Komponente b) werden beim Aufbau des OH-Präpolymeren B) teilweise verzweigte Polyätherpolyole eingesetzt, welche vorzugsweise eine mittlere Hydroxylfunktionalität von 2,5 bis 3,0 und ein mittleres Molekulargewicht von 2000 bis 4000, besonders bevorzugt ca. 3500, aufweisen. Diese Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch auf Formit oder Formose gestartete Polyäther (DE-Offenlegungsschriften 2 639 083 bzw. 2 737 951) kommen erfindungsgemäß in Frage. Bevorzugt sind solche Polyäther, die überwiegend (mehr als 90 Gew.-%, bezogen auf alle vorhandenen OH-Gruppen im Polyäther) sekundäre OH-Gruppen aufweisen.

Die als Komponente c) beim Aufbau des OH-Präpolymeren in Frage kommenden Hydroxylgruppen aufweisenden Polyester sind, z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren

Gemische zur Herstellung der Polyester verwendet werden. Die Polycarbonsäuren können aliphatische cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bisglykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäure, z.B. ω-Hydroxycapronsäure, sind einsetzbar.

Bevorzugt sind Polyester aus Adipinsäure und Äthylenglykol, Propylenglykol oder Butandiol, insbesondere Polypropylenglykoladipate. Auch Rizinusöl kommt als Polyesterkomponente c) in Frage.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z.B. auf den Seiten 45—71, beschrieben.

Für die Herstellung der Präpolymerkomponente B) geeignete niedermolekulare Glykole d) sind beispielsweise:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4 - Bis - hydroxymethyl - cyclohexan, 2-Methyl-1,3-propandiol, Dibromobutendiol, Diäthylenglykol, Triäthylenglykol, Tetraäthylenglykol, höhere Polyäthylenglykole mit einem Molekulargewicht bis ca. 250, Dipropylenglykol, höhere Polypropylenglykole mit einem Molekulargewicht bis ca. 250, Dibutylenglykol, 4,4'-Dihydroxy-diphenylpropan, Di-hydroxymethyl-hydrochinon, Diäthanolamin und N-Methyldiäthanolamin.

Weitere erfindungsgemäß geeignete niedermolekulare Diole vom Molekulargewicht bis 250 sind Esterdiole der allgemeinen Formeln.

$$HO—(CH_2)_x—CO—O—(CH_2)_y—OH$$ und

$$HO—(CH_2)_x—O—CO—R—CO—O—(CH_2)_x—OH$$

in denen

R einen Alkylenrest mit 1—10, vorzugsweise 2—6 C-Atomen bzw. einen Cycloalkylen- oder Arylenrest mit 6—10 C-Atomen

x=2—6 und

y=3—5

bedeuten,

z.B. δ - Hydroxybutyl - ε - hydroxy - capronsäureester, ω - Hydroxyhexyl - δ - hydroxybuttersäureester, Adipinsäure-bis-(β-hydroxyäthyl)ester und Terephthalsäure-bis-(β-hydroxyäthyl)ester;

Diolurethane der allgemeinen Formel

$$HO—(CH_2)_x—O—CO—NH—R'—NH—CO—O—(CH_2)_x—OH$$

in der

R' einen Alkylenrest mit 2—15, vorzugsweise 2—6, C-Atomen oder einen Cycloalkylen- oder Arylenrest mit 6—15 C-Atomen und

x eine Zahl zwischen 2 und 6

darstellen,

z.B. 1,6 - Hexamethylen - bis - (β - hydroxyäthylurethan) oder 4,4'-Diphenylmethan-bis-(δ-hydroxybutylurethan);

sowie Diolharnstoffe der allgemeinen Formel

$$HO—(CH_2)_x—\underset{\underset{R'''}{|}}{N}—CO—NH—R''—NH—CO—\underset{\underset{R'''}{|}}{N}—(CH_2)_x—OH$$

in der

R'' einen Alkylenrest mit 2—15, vorzugsweise 2—9, C-Atomen oder einen Cycloalkylen- oder Arylenrest mit 6—15 C-Atomen,

R''' Wasserstoff oder eine Methylgruppe und

x die Zahlen 2 oder 3

bedeuten,

z.B. 4,4'-Diphenylmethan-bis-(β-hydroxyäthylharnstoff) oder die Verbindung

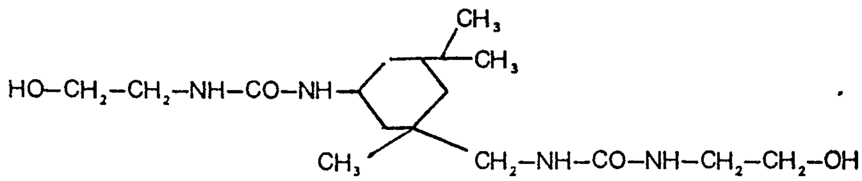

Erfindungsgemäß bevorzugte Diole (d) sind Diäthylenglykol, Triäthylenglykol, Propylenglykol, Dipropylenglykol und Tripropylenglykol. Dipropylenglykol ist besonders bevorzugt.

Erfindungswesentlich ist, daß bei der Herstellung des OH-Präpolymeren geringe Mengen (0,5—5 Gew.-%, bevorzugt 1—2 Gew.-%, bezogen auf die Summe der gegenüber Isocyanaten reaktiven Verbindungen) eines Polyamins (vorzugsweise eines aromatischen Diamins), Hydrazins oder Hydrazids, mitverwendet werden.

Erfindungsgemäß geeignete aliphatische Diamine sind beispielsweise Äthylendiamin, 1,4 - Tetramethylendiamin, 1,11 - Undecamethylendiamin, 1,12-Dodecamethylendiamin sowie deren Gemische, 1-Amino-3,3,5-trimethyl - 5 - amino - methylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, hydracrylsäure und Terephthalsäure; Semicarbazidoalkylen-hydrazide wie z.B. β-Semicarbazidopropionsäurehydrazid (DE-Offenlegungsschrift 1 770 591), Semicarbazido - alkylencarbazinester wie z.B. 2 - Semicarbazidoäthyl - carbazinester (DE-Offenlegungsschrift 1 918 504) oder auch Amino-semicarbazid-Verbindungen wie z.B. β-Aminoäthyl-semicarbazido-carbonat (DE-Offenlegungsschrift 1 902 931).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Ofenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE - Offenlegungsschriften 1 770 525 und 1 809 172 (US-Patentschriften 3 654 364 und 3 736 295), gegebenenfalls in 5-Stellung substituierte 2-Halogen - 1,3 - Phenylendiamine (DE - Offenlegungsschriften 2 001 772, 2 025 896 und 2 065 869), 3,3' - Dichlor - 4,4' - diamino - diphenylmethan, Toluylendiamin, 4,4' - Diaminodiphenylmethan, 4,4' - Diaminodiphenyldisulfide (DE - Offenlegungsschrift 2 404 976), Diaminodiphenyldithioäther (DE - Offenlegungsschrift 2 509 404), durch Alkylthiogruppen substituierte aromatische Diamine (DE-Offenlegungsschrift 2 638,760), Diaminobenzolphosphonsäureester (DE - Offenlegungsschrift 2 459 491), Sulfonat- oder Carboxylatgruppen enthaltende aromatische Diamine (DE - Offenlegungsschrift 2 720 166) sowie die in der DE - Offenlegungsschrift 2 635 400 aufgeführten hochschmelzenden Diamine genannt. Beispiele für aliphatischaromatische Diamine sind die Aminoalkylthioaniline gemäß DE-Offenlegungsschrift 2 734 574. Bevorzugt sind am Kern mit Methyl- und/oder Äthylgruppen substituierte Toluylendiamine wie z.B. 3,5-Diäthyl-2,4-diaminotoluol.

Als Natriumaluminiumsilikate werden z.B. die als Molekularsiebe im Handel befindlichen Zeolithe eingesetzt.

Geeignete Aktivatoren sind Polyurethan-Katalysatoren der an sich bekannten Art, z.B. tertiäre Amine, wie Triäthylamin, Tributylamin, N - Methyl - morpholin, N - Äthyl - morpholin, N,N,N',N'-Tetramethyl-äthylendiamin, Pentamethyl-diäthylentriamin und höhere Homologe (DE - Offenlegungsschriften 2 624 527 und 2 624 528), 1,4-Diazabicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Diäthylbenzyl-amin, Bis-(N,N-diäthylaminoäthyl)-adipat, N,N,N',N'-Tetramethyl-1,3-butandiamin, N,N-Dimethyl-β-phenyläthylamin, 1,2-Dimethylimidazol, 2-Methylimidazol, monocyclische und bicyclische Amidine (DE - Offenlegungsschrift 1 720 633), Bis - (dialkylamino)alkyl-äther (US-Patentschrift 3 330 782, DE - Auslegeschrift 1 030 558, DE - Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triäthanolamin, Triisopropanolamin, N - Methyl - diäthanolamin, N-Äthyl - diäthanolamin, N,N - Dimethyl - äthanolamin, deren Umsetzungsprodukte mit Alkylenoxiden wie Propropylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) bechrieben sind, in Frage, z.B. 2,2,4-Trimethyl-2-silamorpholin und 1,3-Diäthylaminomethyltetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Es können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen, insbesondere Metallsalzen von Carbonsäuren (z.B. dem Pb-Salz von 2-Äthylhexansäure), mit Aminkatalysatoren wie Diazabicyclooctan. Derartige Katalysatorkombinationen führen zu Beschichtungsmassen mit besonders langer Topfzeit bei Raumtemperatur und trotzdem kurzer Aushärtungszeit beim Erhitzen (z.B. 3 Minuten bei 100°C).

Weitere Vertreter von zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Es können gegebenenfalls auch oberflächenaktive Zusatzstoffe wie Emulgatoren mitverwendet werden. Als Emulgatoren kommen z.B. die Natriumsalze von Ricinusöl-sulfonaten oder Salze von Fettsäuren mit Aminen wie ölsaures Diäthylamin oder strearinsaures Diäthanolamin infrage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Auch Reaktionsverzögerer können gegebenenfalls mitverwendet werden, z.B. sauer reagierende Stoff wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Um die Komponente B) der erfindungsgemäßen Beschichtungsmassen herzustellen, werden die oben eingehend beschriebenen Verbindungen a) bis e) in einem one-shot-Verfahren bei einem NCO/(OH+NH)-Äquivalentverhältnis von 0,25:1 — 0,65:1, vorzugsweise 0,35:1 — 0,60:1, besonders bevorzugt 0,50:1—0,55:1, miteinander umgesetzt. Wie oben erläutert, kann man aber auch das gegebenenfalls mitzuverwendende Polyesterpolyol c) erst dem fertigen OH-Präpolymeren zusetzen. Die Komponenten f) und g) werden vorzugsweise ebenfalls schon bei der Herstellung des OH-Präpolymeren mitverwendet, sie können aber auch-ebenso wie ggf. einzusetzende weitere Zusetzstoffe-mit dem fertigen OH-Präpolymeren B) und dem festen Polyisocyanat A) vermischt werden.

Die erfindungsgemäßen, lagerstabilen Polyurethan-Reaktivsysteme eignen sich zur Beschichtung der verschiedenartigsten Substrate. Neben flächigen textilen Substraten können vorzugsweise auch Gewebeschläuche mittels an sich bekannter Beschichtungsanlagen beschichtet werden.

Um das Trägermaterial, z.B. ein Polyestergewebe, mit der erfindungsgemäßen Polyurethanbeschichtung auszurüsten, wird die Beschichtungsmasse, z.B. mittels Rakel, Bürste, Walze oder dergleichen auf den Träger in der gewünschten Schichtstärke aufgebracht. Wegen der extrem langen Topfzeit der Systeme unterliegt die Auftragstechnik keinerlei Beschränkungen. Ein Gelieren oder Aushärten vor der Rakel ist nicht zu befürchten.

Nach dem Auftrag kann das mit der Beschichtung versehene Trägermaterial zur Aushärtung z.B. einen Heizkanal durchlaufen, über einen Heiztisch geführt oder durch ein IR-Feld gezogen werden. Je nachdem, welche Temperaturbelastung das zu beshichtende Substrat aushält, kann z.B. bei Temperaturen zwischen 80 und 180°C gearbeitet werden. Dementsphrechend liegen die Verfestigungszeiten der Beschichtung zwischen etwa 1 und 5 Minuten. Wegen der ausgeprägten Strukturviskosität der Polyurethansysteme kann man sowohl horizontal als auch vertikal beschichten, ohne daß aufgebrachte Strukturen in der Wärme verlaufen.

Die folgenden Beispiele erläutern die vorliegende Erfindung. Wenn nicht anders vermerkt, sind Mengenangaben als Gewichtsteile bzw. Gewichtsprozente zu verstehen.

Beispiel 1

Um ein OH-terminiertes Präpolymer herzustellen, werden

80 Teile eines teilweise verzweigten Polypropylenglykols (OH-Zahl: 42, Funktionalität f=2,75)

20 Teile Dipropylenglykol,

5 Teile Na-Al-Silikat (50%ig im obigen Polyäther suspendiert),

2 Teile Polypropylenglykoladipat (Molekulargewicht: 820),

1 Teil 4-Methyl-2,6-diäthyl-1,3-diaminobenzol und

0,5 Teile Diazabicyclooctan (33%ig in Dipropylenglykol) mit

18 Teilen 2,4-Toluylendiisocyanat

unter städigem Rühren zur Reaktion gebracht. Die Reaktionstemperatur steigt dabei auf ca. 60°C an. Nach ca. 1 Stunde ist die Umsetzung beendet.

In 100 Teile dieses OH-Präpolymeren werden bei Raumtemperatur 17 Teile dimeres 2,4-Toluylendiisocyanat in einem geeigneten Mischer oder über eine Einreibwalze eingearbeitet. Anschließend wird in die fertige Mischung 1% eines Aktivatorgemisches, bestehend aus 88% Diazabicyclooctan (33%ig in Dipropylenglykol) und 12% Bleioctoat (24%ig in Testbenzin) eingerührt.

Die so hergestellte Paste ist bei Raumtemperatur mehrere Monate lagerstabil. Bei 50°C beträgt die Lagerstabilität 2 Wochen. Beim Erhitzen auf 100°C tritt innerhalb von 1—3 Minuten Verfestigung ein. Die Paste kann gegebenenfalls mit geeigneten Farbpigmenten eingefärbt werden.

Am ausgehärteten Polyurethan wurden folgende physikalischen Werte ermittelt:

| | | |
|---|---|---|
| Dichte | | 1,065 $Mg/m^3$ |
| Shore-Härte A | (DIN 53505) | 81 |
| Zugfestigkeit | (DIN 53504) | 7,23 MPa |
| Bruchdehnung | (DIN 53504) | 100% |
| Abrieb | (DIN 53516) | 141 $mm^3$. |

Beispiel 2

Für die Herstellung eines härteren Beschichtungsmaterials wird folgendermaßen verfahren:

80 Teile des Polyäthers aus Beispiel 1,

20 Teile Propylenglykol-1,2,

5 Teile Na-Al-Silikat (50%ig im obigen Polyäther suspendiert),

2 Teile des Polypropylenglykoladipats aus Beispiel 1,

1,5 Teile Diäthyltoluylendiamin und

0,5 Teile Diazabicyclooctan (33%ig in Dipropylenglykol)

werden mit

27 Teilen 2,4-Toluylendiisocyanat

unter Rühren umgesetzt. Die Reaktionstemperatur steigt je nach Ansatzgröße auf 80—100°C an.

Nach Abkühlung werden in 100 Teile des so erhaltenen OH-terminierten Präpolymeren 24 Teile dimeres 2,4-Tolulyendiisocyanat wie in Beispiel 1 beschrieben eingearbeitet.

Anschließend wird ebenso wie in Beispiel 1 aktiviert. Diese reaktive Paste ist ebenfalls bei Reumtemperatur monatelang lagerstabil, härtet aber bei 100°C innerhalb von 1—3 Minuten aus.

Prüfdaten, gemessen am ausreagierten Material:

| | |
|---|---|
| Dichte | 1,035 $Mg/m^3$ |
| Shore Härte A/D | 89/40 |
| Zugfestigkeit | 12,06 MPa |
| Bruchdehnung | 208% |
| Elastizität | 26% |
| Abrieb | 184 $mm^3$ |

Beispiel 3 (Vergleichsversuch)

Herstellung eines OH-terminierten Präpolymeren mit einem linearen Polyäther:

80 Teile eines linearen Polypropylenglykols (OH-Zahl: 56),

20 Teile Dipropylenglykol,

5 Teile Na-Al-Silikat (50%ig im Polyäther aus Beispiel 1 suspendiert),

2 Teile des Polypropylenglykoladipats aus Beispiel 1,
1 Teil Diäthyltoluylendiamin und
0,5 Teile Diazabicyclooctan (33%ig in Dipropylenglykol)
werden wie in den vorangegangenen Beispielen mit
17 Teilen Toluylendiisocyanat umgesetzt.

In 100 Teile dieses Präpolymeren werden 20 Teile dimeres Toluylendiisocyanat eingearbeitet.

Die resultierende Paste härtet bei gleicher Aktivierung mit dem in Beispiel 1 beschriebenen Aktivatorgemisch bei 100°C erst nach 10 Minuten aus. Die Oberfläche bleibt klebrig.

Beispiel 4 (Vergleichsversuch)

80 Teile eines trifunktionellen äthoxilierten Polypropylenoxids mit endständigen primären OH-Gruppen (OH-Zahl: 36),
20 Teile Dipropylenglykol,
5 Teile Na-Al-Silikat (als 50%ige Suspension im Polyäther aus beispiel 1),
2 Teile Polypropylenglykoladipat,
1 Teil Diäthyltoluylendiamin und
0,5 Teile Diazabicyclooctan (33%ig in Dipropylenglykol)
werden mit
17 Teilen Toluylendiisocyanat umgesetzt.

Anschließend wird mit 18 Teilen des dimeren 2,4-Toluylendiisocyanats auf 100 Teile des Präpolymeren eine Paste hergestellt. Nach Aktivierung mit 1% Aktivatorgemisch nach Beispiel 1 wird bei 100°C innerhalb von 20 Sekunden eine Durchhärtung erzielt. Die Lagerstabilität der Paste bei Raumtemperatur beträgt aber nur ca. 8 Stunden.

Beispiel 5 (Vergleichsversuch)

80 Teile des Polyäthers aus Beispiel 1,
20 Teile Dipropylenglykol,
5 Teile Na-Al-Silikat (als 50%ige Suspension im Polyäther aus Beispiel 1),
2 Teile Polypropylenglykoladipat und
0,5 Teile Diazabicyclooctan (33%ig in Dipropylenglykol)
werden mit
17 Teilen Toluylendiisocyanat umgesetzt.

Die Rezeptur entspricht der nach Beispiel 1, jedoch ohne Diamin. Kurz nach dem Einrühren des Isocyanats fällt das entstandene Urethan-Hartsegment grießartig aus. Die anschließende Weiterverarbeitung mit dimerem Isocyanat führt zu keinem homogenen Endprodukt.

Beispiel 6 (Vergleichsversuch)

Beispiel 2 wird ohne Mitverwendung des Polyesterpolyols wiederholt:

Bereits nach wenigen Stunden steigt die Viskosität der Mischung aus OH-Präpolymerem und dimerem Toluylendiisocyanat stark an, so daß das Material nicht mehr zu verarbeiten ist.

Beispiel 7 (Vergleichsversuch)

Beispiel 1 wird ohne Zeolith wiederholt.

Nach der Mischung des OH-Präpolymeren mit dimerem Toluylendiisocyanat und Aktivierung wird eine Paste erhalten, die bei Raumtemperatur ca. 4 Wochen lagerstabil ist. Die Stabilität bei 50°C geht auf ca. 3 Tage zurück. Beim Ausheizen der Beschichtungsmasse tritt eine unkontrollierte Gasbildung auf, und es werden blasige Elastomere erhalten.

Beispiel 8 (Vergleichsversuch)

Umsetzung eines Polyolgemisches mit dimerem Isocyanat ohne Vorverlängerung mit monomerem Toluylendiisocyanat:
80 Teile des Polyäthers aus Beispiel 1,
20 Teile Dipropylenglykol,
5 Teile Na-Al-Silikat (50%ig im Polyäther suspendiert),
1 Teil Diäthyltoluylendiamin gemäß Beispiel 1 und
0,5 Teile Diazabicyclooctan (33%ig in Dipropylenglykol)
werden mit
39 Teilen dimerem Toluylendiisocyanat homogen vermischt. Anschließend wird mit 1% Aktivatorgemisch wie in Beispiel 1 aktiviert.

Die fertige Paste verfestigt bei 110°C innerhalb von 2 Minuten, bleibt aber im Unterschied zu dem Polyurethan aus Beispiel 1 weich und klebrig. Nach 24-stündiger Lagerung bei Raumtemperatur ist die Paste zwar noch spachtelbar, aber die Aushärtung bei 110°C ist noch unvollkommener.

**Patentansprüche**

1. Lösungsmittelfreie, rakelfähige, pastenförmige, bei Raumtemperatur lagerstabile Polyurethan-Reaktivbeschichtungsmassen mit kurzer Aushärtungszeit beim Erhitzen, bestehend aus

A) 5 bis 30 Gew.% eines Polyisocyanates mit einem Schmelzpunkt über 100°C und
B) 95 bis 70 Gew.% einer Polyhydroxylverbindung, wobei die Komponente B) oder die Mischung von A) und B)
1 bis 4 Gew.% eines Molekularsiebes vom Natriumaluminiumsilikat-Typ,
0,1 bis 5 Gew.% eines Aktivators und ggf. weitere Zusatzstoffe enthält,

dadurch gekennzeichnet, daß Komponente B) ein Hydroxylgruppen aufweisendes Präpolymeres aus

a) einem Polyisocyanat,
b) 65 bis 80 Gew.%, bezogen auf die Summe der Komponenten b) bis e), eines teilweise verzweigten Polyätherpolyols, welches mehr als 90 Gew.%, bezogen auf die vorhandenen OH-Gruppen im Polyäther, sekundäre OH-Gruppen und ein Molekulargewicht von 1000 bis 4500 aufweist,
c) 0 bis 10 Gew.% eines Polyesterpolyols mit

einem Molekulargewicht von 500 bis 2000,

d) 10 bis 30 Gew.% eines Glykols mit einem Molekulargewicht von 62 bis 250 und

e) 0,5 bis 5 Gew.% eines hydroxylgruppenfreien Polyamins, Hydrazins oder Hydrazids darstellt, wobei

das Äquivalentverhältnis von Komponente a) zu den Komponenten b) bis e) zwischen 0,25 und 0,65 liegt, und wobei ggf. die komponente c) anstatt in B) eingebaut, dem Gemisch aus A) und B) zugesetzt ist.

2. Beschichtungsmassen nach Anspruch 1, bestehend aus

A) 10 bis 20 Gew.% eines Diisocyanates mit einem Schmelzpunkt oberhalb von 125°C und

B) 80 bis 90 Gew.% einer Polyhydroxylverbindung, wobei die Komponente B) oder die Mischung von A) und B)

1 bis 4 Gew.% eines Molekularsiebes vom Natriumaluminiumsilikat-Typ,

0,1 bis 5 Gew.% eines Aktivators und ggf. weitere Zasatzstoffe enthält,

dadurch gekennzeichnet, daß Komponente B) ein Hydroxylgruppen aufweisendes Präpolymeres aus

a) einem Diisocyanat,

b) 65 bis 80 Gew.%, bezogen auf die Komponenten b) bis e) eines Polyätherpolyols mit einer mittleren OH-Funktionalität von 2,5 bis 3, welches mehr als 90 Gew.%, bezogen auf vorhandenen OH-Gruppen im Polyether, sekundäre OH-Gruppen und ein Molekulargewicht von 2000 bis 4000 aufweist,

c) 1 bis 5 Gew.% eines Adipinsäurepolyesters mit einem Molekulargewicht von 700 bis 1200,

d) 15 bis 25 Gew.% eines Glykols mit einem Molekulargewicht von 76 bis 150 und

e) 0,5 bis 5 Gew.% eines aromatischen, hydroxylgruppenfreien Diamins mit einem Molekulargewicht unter 200 darstellt, wobei

das Äquivalentverhältnis von Komponente a) zu den Komponenten b) bis e) zwischen 0,35 und 0,6 liegt.

3. Beschichtungsmassen nach Anspruch 1 und 2, dadurch gekennziechnet, daß Polyisocyanat A) mit einem Schmelzpunkt über 100°C das dimere 2,4-Toluylendiisocyanat.

4. Beschichtungsmassen nach Anspruch 1 bis 3, dadurch gekennzeichnet, daß als aromatische Amine e) am Kern mit Methyl- und/oder Ethylgruppen substituierte Toluylendiamine verwendet werden.

**Revendications**

1. Mélanges réactifs d'enduction formant un polyuréthanne, dépourvus de solvant, stables à l'entreposage à la température ambiante, pâteux et pouvant être appliqués à la racle, à courte durée de durcissement lors du chauffage, constitués par

A) 5 à 30% en poids d'un polyisocyanate ayant un point de fusion supérieur à 100°C et

B) 95 à 70% en poids d'un composé polyhydroxylique, le composant B) ou le mélange des composants A) et B) contenant 1 à 4% en poids d'un tamis moléculaire du type silicate de sodium et d'aluminium,

0,1 à 5% en poids d'un activateur et, le cas échéant, d'autres additifs,

caractérisés en ce que le composant B) représente un prépolymère porteur de groupes hydroxyle dérivé de

a) un polyisocyanate,

b) 65 à 80% en poids, par rapport à la somme des composants b) à e) d'un polyétherpolyol partiellement ramifié, qui présente plus de 90% en poids, par rapport aux groupes OH présents dans le polyéther, de groupes OH secondaires et un poids moléculaire de 1000 à 4500,

c) 0 à 10% en poids d'un polyester-polyol ayant un poids moléculaire de 500 à 2000,

d) 10 à 30% en poids d'un glycol ayant un poids moléculaire de 62 à 250, et

e) 0,5 à 5% en poids d'une polyamine, d'une hydrazine ou d'un hydrazide dépourvu de groupes hydroxy,

le rapport des équivalents du composant a) aux composants b) à e) étant compris entre 0,25 et 0,65 et le composant c), au lieu d'être incorporé à B), étant éventuellement ajouté au mélange de A) et B).

2. Mélanges d'enduction suivant la revendication 1, constitués par

A) 10 à 20% en poids d'un diisocyanate ayant un point de fusion de plus de 125°C, et

B) 80 à 90% en poids d'un composé polyhydroxylique, le composant B) ou le mélange des composants A) et B) contenant 1 à 4% en poids d'un tamis moléculaire du type silicate de sodium et d'aluminium,

0,1 à 5% en poids d'un activateur et, le cas échéant, d'autres additifs,

caractérisés en ce que le composant B) est un prépolymère porteur de groupes hydroxyle, préparé à partir

a) d'un diisocyanate,

b) de 65 à 80% en poids, par rapport aux composants b) à e), d'un polyéther-polyol à fonctionnalité OH moyenne de 2,5 à 3, qui porte plus de 90% en poids, par rapport aux groupes OH présents dans le polyéther, de groupes OH secondaires et qui a un poids moléculaire de 2000 à 4000,

c) de 1 à 5% en poids d'un polyester d'acide adipique ayant un poids moléculaire de 700 à 1200,

d) de 15 à 25% en poids d'un glycol ayant un poids moléculaire de 76 à 150 et

e) de 0,5 à 5% en poids d'une diamine aromatique dépourvue de groupes hydroxyle, ayant un poids moléculaire moyen inférieur à 200,

le rapport d'équivalents du composant a) aux composants b) à e) étant compris entre 0,35 et 0,6.

3. Mélanges d'enduction suivant les revendications 1 et 2, caractérisés en ce que le polyisocyanate A) de point de fusion supérieur à 100°C est le 2,4-diisocyanatotoluène dimère.

4. Mélanges d'enduction suivant les revendications 1 à 3, caractérisés en ce qu'on utilise comme amines aromatiques e) des diaminotoluènes substitués sur le noyau avec des groupes méthyle et/ou éthyle.

## Claims

1. Solvent-free polyurethane reactive coating compositions in paste form which can be doctor-coated, are stable under storage at room temperature and have a short curing time when heated, consisting of

A) 5 to 30% by weight of a polyisocyanate with a melting point higher than 100°C and

B) 95 to 70% by weight of a polyhydroxyl compound component B) or the mixture of A) and B) containing 1 to 4% by weight of a molecular sieve of the sodium aluminium silicate type, 0.1 to 5% by weight of an activator and optionally other additives,

characterised in that component B) is a prepolymer containing hydroxyl groups and consisting of

a) a polyisocyanate

b) 65 to 80% by weight, based on the sum of components b) to e), of a partially branched polyether polyol which contains more than 90% by weight, based on the OH groups present in the polyether, of secondary OH groups and has a molecular weight of 1000 to 4500,

c) 0 to 10% by weight of a polyester polyol with a molecular weight of 500 to 2000,

d) 10 to 30% by weight of a glycol with a molecular weight of 62 to 250 and

e) 0.5 to 5% by weight of a hydroxyl-free polyamine, hydrazine or hydrazide,

wherein the equivalent ratio of component a) to components b) to e) is between 0.25 and 0.65 and wherein component c), instead of being incorporated into B), is optionally added to the mixture of A) and B).

2. Coating compositions according to Claim 1, consisting of

A) 10 to 20% by weight of a diisocyanate with a melting point higher than 125°C and

B) 80 to 90% of a polyhydroxyl compound, component B) or the mixture of A) and B) containing 1 to 4% by weight of a molecular sieve of the sodium aluminium silicate type, 0.1 to 5% by weight of an activator and optionally other additives,

characterised in that component B) is a prepolymer containing hydroxyl groups and consisting of

a) a diisocyanate,

b) 65 to 80% by weight, based on the components b) to e), of a polyether polyol with an average OH-functionality of 2.5 to 3, which contains more than 90% by weight, based on the OH groups present in the polyether, of secondary OH groups and has a molecular weight of 2000 to 4000,

c) 1 to 5% by weight of an adipic acid polyester with a molecular weight of 700 to 1200,

d) 15 to 25% by weight of a glycol with a molecular weight of 76 to 150 and

e) 0.5 to 5% by weight of an aromatic, hydroxyl-free diamine with a molecular weight lower than 200,

wherein the equivalent ratio of component a) to components b) to 3) is between 0.35 and 0.6.

3. Coating compositions according to Claim 1 and 2, characterised in that the polyisocyanate A) with a melting point higher than 100°C is dimeric 2,4-toluylene diisocyanate.

4. Coating compositions according to Claim 1 to 3, characterised in that the aromatic amines e) used are toluylene diamines which are substituted at the nucleus by methyl and/or ethyl groups.